# EUROPÄISCHE PATENTSCHRIFT

(11) **EP 3 730 498 B1**
(45) Veröffentlichungstag und Bekanntmachung des Hinweises auf die Patenterteilung: **20.12.2023**
(21) Anmeldenummer: 20165486.0
(22) Anmeldetag: 25.03.2020
(51) Int. Cl.: C07F 7/18, C08K 9/06, C09J 147/00, C09J 107/00, B60C 1/00, C08K 3/36, C08L 9/06

(54) **SILAN, KAUTSCHUKMISCHUNG ENTHALTEND DAS SILAN UND FAHRZEUGREIFEN, DER DIE KAUTSCHUKMISCHUNG IN WENIGSTENS EINEM BAUTEIL AUFWEIST SOWIE VERFAHREN ZUR HERSTELLUNG DES SILANS**
SILANE, RUBBER COMPOSITION CONTAINING THE SILANE AND VEHICLE TYRE, COMPRISING THE RUBBER MIXTURE IN AT LEAST ONE COMPONENT AND PROCESS FOR PRODUCING THE SILANE
SILANE, MÉLANGE CAOUTCHOUTEUX CONTENANT LE SILANE ET PNEU DE VÉHICULE COMPORTANT LE MÉLANGE CAOUTCHOUTEUX DANS AU MOINS UN COMPOSANT AINSI QUE PROCÉDÉ DE FABRICATION DE SILANE

(30) Priorität: 26.04.2019 DE 102019206000
(43) Veröffentlichungstag der Anmeldung: 28.10.2020
(73) Patentinhaber: Continental Reifen Deutschland GmbH, 30165 Hannover (DE)
(72) Erfinder: Dauer, David-Raphael, 30419 Hannover (DE); Strohmeier, Julian, 30419 Hannover (DE); Jacob, Andreas, 30419 Hannover (DE); Jürges, Jaana, 30419 Hannover (DE); Davin, Julien, 30419 Hannover (DE); Schöffel, Julia, 30419 Hannover (DE)
(74) Vertreter: Continental Corporation

(56) Entgegenhaltungen:
- EP-A1- 2 826 777
- WO-A1-2019/001822
- US-A1- 2018 155 370
- JOËL J. E. MOREAU ET AL: "A Better Understanding of the Self-Structuration of Bridged Silsesquioxanes", ANGEWANDTE CHEMIE INT ED, Bd. 43, Nr. 2, 1. Januar 2004 (2004-01-01) , Seiten 203-206, XP055725471, DE ISSN: 1433-7851, DOI: 10.1002/anie.200352485
- I V Mel 'nik ET AL: "070-3632/04/7411-1658 C2004 MAIK [Nauka/Interperiodica] Synthesis of Alkoxysilanes as Starting Substances for Preparation of New Materials by the Sol!Gel Procedure. Silanes with Urea Functional Group", Russian Journal of General Chemistry, 1. Januar 2004 (2004-01-01), Seiten 1658-1664, XP055725477, Gefunden im Internet: URL:https://link.springer.com/content/pdf/ 10.1007/s11176-005-0080-x.pdf
- JOËL J. E. MOREAU ET AL: "Nanostructuring organo-silicas: combination of intermolecular interactions and molecular recognition properties to generate self-assembled hybrids with phenylene or adenine...thymine bridging units", NEW JOURNAL OF CHEMISTRY, Bd. 29, Nr. 5, 1. Januar 2005 (2005-01-01) , Seite 653, XP055725479, GB ISSN: 1144-0546, DOI: 10.1039/b419376h
- PICHON B P ET AL: "A simple access to @w-aminoalkyltrialkoxysilanes: Tunable linkers for self-organised organosilicas", JOURNAL OF ORGANOMETALLIC CHEMISTRY, ELSEVIER, AMSTERDAM, NL, Bd. 691, Nr. 6, 1. März 2006 (2006-03-01), Seiten 1126-1130, XP028047789, ISSN: 0022-328X, DOI: 10.1016/J.JORGANCHEM.2005.11.036 [gefunden am 2006-03-01]
- DANIELA PLETSCH ET AL: "Bis-silylated terephthalate as a building block precursor for highly fluorescent organic-inorganic hybrid materials", NEW JOURNAL OF CHEMISTRY, Bd. 36, Nr. 12, 1. Januar 2012 (2012-01-01), Seite 2506, XP055725481, GB ISSN: 1144-0546, DOI: 10.1039/c2nj40434f
- M. A. Wahab: "Synthesis and Characterization of Multifunctional Periodic Mesoporous Organosilica from Diureidophenylene Bridged Organosilica Precursor", Journal of Nanoscience and Nanotechnology, 1. Januar 2012 (2012-01-01), Seiten 4531-4539, XP055725484, DOI: 10.1166/jnn.2012.6215 Gefunden im Internet: URL:https://www.ingentaconnect.com/content /asp/jnn/2012/00000012/00000006/art00013;j sessionid=9g2h5aaefj6mt.x-ic-live-01 [gefunden am 2020-08-27]
- SOFIA BENYAHYA ET AL: "Efficient and Versatile Sol-Gel Immobilized Copper Catalyst for Ullmann Arylation of Phenols", ADVANCED SYNTHESIS & CATALYSIS, Bd. 350, Nr. 14-15, 6. Oktober 2008 (2008-10-06), Seiten 2205-2208, XP055725485, DE ISSN: 1615-4150, DOI: 10.1002/adsc.200800360
- HUANRONG LI ET AL: "Construction and Photoluminescence of Monophase Hybrid Materials Derived from a Urea-Based Bis-Silylated Bipyridine", EUROPEAN JOURNAL OF INORGANIC CHEMISTRY, Bd. 2009, Nr. 4, 1. Februar 2009 (2009-02-01), Seiten 519-523, XP055488326, DE ISSN: 1434-1948, DOI: 10.1002/ejic.200801017
- JULIEN GRAFFION ET AL: "Modulating the Photoluminescence of Bridged Silsesquioxanes Incorporating Eu 3+ -Complexed n , n '-Diureido-2,2'-bipyridine Isomers: Application for Luminescent Solar Concentrators", CHEMISTRY OF MATERIALS, Bd. 23, Nr. 21, 8. November 2011 (2011-11-08), Seiten 4773-4782, XP055725488, US ISSN: 0897-4756, DOI: 10.1021/cm2019026
- BORAH PARIJAT ET AL: "Urea-pyridine bridged periodic mesoporous organosilica: An efficient hydrogen-bond donating heterogeneous organocatalyst for Henry reac", JOURNAL OF CATALYSIS, ACADEMIC PRESS, DULUTH, MN, US, Bd. 330, 31. Juli 2015 (2015-07-31), Seiten 129-134, XP029279808, ISSN: 0021-9517, DOI: 10.1016/J.JCAT.2015.07.011
- MENGSHUAI LIU ET AL: "Periodic Mesoporous Organosilica with a Basic Urea-Derived Framework for Enhanced Carbon Dioxide Capture and Conversion Under Mild Conditions", CHEMSUSCHEM, Bd. 10, Nr. 6, 22. März 2017 (2017-03-22), Seiten 1110-1119, XP055725490, DE ISSN: 1864-5631, DOI: 10.1002/cssc.201600973

## Beschreibung

Die Erfindung betrifft ein Silan, eine Kautschukmischung enthaltend das Silan und einen Fahrzeugreifen, der die Kautschukmischung in wenigstens einem Bauteil aufweist, sowie ein Verfahren zur Herstellung des Silans.

Der Gegenstand der Erfindung ist in den beigefügten Patentansprüchen definiert.

Silane sind als Zuschlagstoffe für Kautschukmischungen, insbesondere für Fahrzeugreifen, bekannt, und zwar insbesondere für Kautschukmischungen, die wenigstens eine Kieselsäure als Füllstoff enthalten.

Prinzipiell kann unterschieden werden zwischen Silanen, die nur an Kieselsäure oder vergleichbare Füllstoffe anbinden und hierzu insbesondere wenigstens eine Silyl-Gruppe aufweisen, und Silanen, die zusätzlich zu einer Silyl-Gruppe eine reaktive Schwefel-Gruppierung, wie insbesondere eine Sₓ-Gruppierung (mit x > oder gleich 2) oder eine Mercapto-Gruppe S-H oder geblockte S-SG-Gruppierung aufweisen, wobei SG für eine Schutzgruppe steht, sodass das Silan durch Reaktion der Sₓ- oder S-H-Gruppierung oder der S-SG-Gruppierung nach Entfernen der Schutzgruppe bei der Schwefelvulkanisation auch an Polymere anbinden kann.

Im Stand der Technik bekannte an Polymere und Kieselsäure anbindende Silane gehen beispielsweise aus der DE 2536674 C3 und der DE 2255577 C3 hervor. Die Kieselsäure wird dabei mittels derartiger sogenannter bifunktioneller Silane an das oder die Polymer(e) angebunden.

Im Stand der Technik sind auch Silane bekannt, die nur an Kieselsäure anbinden. So offenbart beispielsweise die WO 2012092062 A1 derartige "nicht-Polymer-reaktive" Silane in Kombination mit bifunktionellen Silanen. Die "nicht-Polymer-reaktiven" Silane weisen zwei füllstoffaktive Silyl-Gruppen auf, zwischen denen als Abstandsgruppe eine Alkylengruppen oder auch ein Benzolring angeordnet ist.

Auch in der EP 1085045 B1 werden nur an Kieselsäure anbindende Silane offenbart.

Die WO 2019/001822 A1 offenbart ein Silan, eine Kautschukmischung enthaltend das Silan und einen Fahrzeugreifen, der die Kautschukmischung in wenigstens einem Bauteil aufweist, wodurch im Vergleich zum Stand der Technik eine Verbesserung der Steifigkeit und damit der Handling-Prediktoren der Kautschukmischung, insbesondere für die Anwendung im Fahrzeugreifen, erzielt wird.

Der vorliegenden Erfindung liegt die Aufgabe zugrunde, ein neuartiges Silan bereitzustellen und eine Kautschukmischung mit dem Silan bereitzustellen, wodurch im Vergleich zum Stand der Technik eine weitere Verbesserung im Eigenschaftsprofil umfassend das Rollwiderstandsverhalten, das Griffverhalten (*engl.* "grip"), insbesondere Nassgriff, und die Steifigkeit und damit insbesondere die Handling-Prediktoren der Kautschukmischung, insbesondere für die Anwendung im Fahrzeugreifen, erzielt wird.

Gelöst wird die Aufgabe durch das erfindungsgemäße Silan gemäß Anspruch 1, die mit dem erfindungsgemäßen Silan modifizierte Kieselsäure, die erfindungsgemäße Kautschukmischung enthaltend das Silan sowie den erfindungsgemäßen Fahrzeugreifen, der die erfindungsgemäße Kautschukmischung in wenigstens einem Bauteil aufweist. Ferner wird die Aufgabe durch das Verfahren zur Herstellung des Silans gelöst.

Das erfindungsgemäße Silan weist folgende Formel I) auf:

I) (R1)ₒSi-R²-X-A-[Y-A]ₘ-X-R²-Si(R¹)ₒ ,

wobei o = 3 ist und die Reste R¹ unabhängig voneinander gleich oder verschieden voneinander sein können und ausgewählt sind aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen, Arylgruppen mit 6 bis 20 Kohlenstoffatomen, Alkylgruppen mit 1 bis 10 Kohlenstoffatomen, Alkenylgruppen mit 2 bis 20 Kohlenstoffatomen, Alkinylgruppen mit 2 bis 20 Kohlenstoffatomen, Aralkylgruppen mit 7 bis 20 Kohlenstoffatomen, Halogeniden oder
Alkylpolyethergruppen -O-(R⁶-O)ᵣ-R⁵ wobei R⁶ gleich oder verschieden sind und verzweigte oder unverzweigte, gesättigte oder ungesättigte, aliphatische, aromatische oder gemischt aliphatisch/aromatische verbrückende C₁-C₃₀-Kohlenwasserstoffgruppen sind, vorzugsweise -CH₂-CH₂-, r eine ganze Zahl von 1 bis 30, vorzugsweise 3 bis 10 ist, und R⁵ unsubstituierte oder substituierte, verzweigte oder unverzweigte, terminale Alkyl-, Alkenyl-, Aryl- oder Aralkylgruppen, vorzugsweise -C₁₃H₂₇ Alkyl-Gruppe, sind
   oder
zwei R¹ bilden eine cyclische Dialkoxygruppe mit 2 bis 10 Kohlenstoffatomen, oder es können zwei oder mehr Silane gemäß Formel I) über Reste R¹ verbrückt sein; und
wobei die Reste R² unabhängig voneinander gleich oder verschieden voneinander sein können und ausgewählt sind aus der Gruppe bestehend aus linearen und verzweigten Alkylengruppen mit 1 bis 20 Kohlenstoffatomen, Cycloalkylengruppen mit 4 bis 12 Kohlenstoffatomen, Arylengruppen mit 6 bis 20 Kohlenstoffatomen, Alkenylengruppen mit 2 bis 20 Kohlenstoffatomen, Alkinylengruppen mit 2 bis 20 Kohlenstoffatomen und Aralkylengruppen mit 7 bis 20 Kohlenstoffatomen; und
wobei die Gruppen X unabhängig voneinander gleich oder verschieden voneinander sein können und ausgewählt sind aus den Gruppen -HNC(=O)-, -C(=O)NH-, -C(=O)O-, -OC(=O)-, -OC(=O)NH-, -HNC(=O)O-, -HNC(=O)NH-, -R³NC(=O)NR³-, -R³NC(=NR³)NR³-, - R³NC(=S)NR³-, wobei die Reste R³ innerhalb der Gruppe X gleich oder verschieden sein können und ausgewählt sind aus einem Wasserstoffatom oder ausgewählt sind aus der Gruppe bestehend aus linearen und verzweigten Alkylgruppen mit 1 bis 20 Kohlenstoffatomen, Cycloalkylgruppen mit 4 bis 12 Kohlenstoffatomen, Arylgruppen mit 6 bis 20 Kohlenstoffatomen, Alkenylgruppen mit 2 bis 20 Kohlenstoffatomen, Alkinylgruppen mit 2 bis 20 Kohlenstoffatomen und Aralkylgruppen mit 7 bis 20 Kohlenstoffatomen unter der Bedingung, dass wenigstens ein R³ innerhalb jeder Gruppe X ein Wasserstoffatom ist; und
wobei die Gruppen A innerhalb eines Moleküls unabhängig voneinander gleich oder verschieden voneinander sein können und aromatische Gruppen sind; und wobei die Gruppen Y unabhängig voneinander innerhalb eines Moleküls gleich oder verschieden voneinander sein können und ausgewählt sind aus den Gruppen -HNC(=O)- und -C(=O)NH- ;
und wobei m gleich 1 oder 2 ist; und wobei das Silan auch in Form von Oligomeren vorliegen kann, die durch Hydrolyse und Kondensation von Silanen der Formel I) entstehen.

Im Vergleich zu aus dem Stand der Technik bekannten Silanen weist das erfindungsgemäße Silan mit der Gruppe -R²-X-A-[Y-A]ₘ-X-R²- eine rigide, vergleichsweise lange und polare Abstandsgruppe zwischen den beiden Silyl-Gruppen auf, die insbesondere wenigstens eine aromatische Gruppe A und wenigstens zwei Verknüpfungseinheiten X umfasst. Hierdurch wird erfindungsgemäß ein neuartiges Silan bereitgestellt. Eine Kautschukmischung, die das erfindungsgemäße Silan enthält, weist ein optimiertes Eigenschaftsprofil auf, welches insbesondere auf die vorhandene aromatische Gruppe A in Kombination mit den zwei Verknüpfungseinheiten X innerhalb der Abstandsgruppe zurückgeführt werden könnte. Die erfindungsgemäße Kautschukmischung weist somit eine gewisse Verbesserung hinsichtlich des Eigenschaftsprofils umfassend Handling-Prediktoren auf und der erfindungsgemäße Fahrzeugreifen zeigt u. a. ein verbessertes Handling-Verhalten.

Im Folgenden werden das erfindungsgemäße Silan und dessen bevorzugte Ausführungsformen erläutert. Sämtliche Aspekte gelten auch für das Silan in der erfindungsgemäßen Kautschukmischung und im erfindungsgemäßen Fahrzeugreifen sowie für das Herstellverfahren sofern nicht ausdrücklich anders bezeichnet.

Die Begriffe "Rest" und "Gruppe" werden im Rahmen der vorliegenden Erfindung im Zusammenhang mit chemischen Formelbestandteilen synonym verwendet.

Wie in Formel I) dargestellt, handelt es sich bei dem erfindungsgemäßen Silan um ein nicht an Polymere anbindendes füllstoffreaktives Silan mit zwei Silyl-Gruppen und einer vergleichsweise rigiden, langen und polaren Abstandsgruppe zwischen den Silyl-Gruppen mit wenigstens einer aromatischen Gruppe A und zwei Verknüpfungseinheiten X.

In der Formel I) kann m Werte von 1 oder 2 annehmen. Die Gruppierung [Y-A] kann somit mit m gleich 1 oder 2 im Molekül entsprechend oft vorhanden sein, wobei das oder die Gruppen A unabhängig von dem formelmäßig unabdingbar vorhandenen A aromatische Gruppe A ist/sind. Y stellt dabei eine Verknüpfungseinheit dar, wobei die Y im Fall von m gleich 2 unabhängig voneinander gleich oder verschieden sein können.

Erfindungsgemäß ist m gleich 1 oder 2.

Gemäß einer nicht-erfindungsgemäßen Ausführungsform ist m gleich 0, d.h. ist m = 0. Ein derartiges Molekül ist vergleichsweise einfach herzustellen, wobei das Wesen des Moleküls, nämlich die oben beschriebene Kombination der aromatischen Gruppe A mit den Verknüpfungen X in der Abstandsgruppe vorhanden ist, sodass hiermit bereits ein neuartiges Silan mit einer rigiden Aramid-Struktur bereitgestellt ist, mit dem insbesondere optimierte Eigenschaften in der Kautschukmischung erzielt werden können. Dabei könnte das Silan eventuell aufgrund der polaren Abstandsgruppe über Wasserstoffbrückenbindungen reversibel an die Oberfläche von Kieselsäure anbinden.

Gemäß einer bevorzugten Ausführungsform der Erfindung ist m gleich 1, d.h. bevorzugt ist m = 1. Ein derartiges Molekül ist ein neuartiges Silan mit einer rigiden Aramid-Struktur und weist zusätzlich eine Verknüpfungseinheit Y und eine weitere aromatische Gruppe A auf, wodurch die Eigenschaften in der erfindungsgemäßen Kautschukmischung weiter optimiert werden können. Es ergeben sich die oben genannten Vorteile hinsichtlich der Eigenschaften, wobei gleichzeitig die Anbindungswahrscheinlichkeit von beiden Silyl-Gruppen an eine Kieselsäureoberfläche erhöht ist.

Gemäß einer weiteren bevorzugten Ausführungsform der Erfindung ist m gleich 2, d.h. bevorzugt ist m = 2. Ein derartiges Molekül ist ein neuartiges Silan mit einer rigiden Aramid-Struktur und weist zusätzlich zwei Verknüpfungseinheiten Y und zwei weitere aromatische Gruppen A auf, wodurch die Eigenschaften in der erfindungsgemäßen Kautschukmischung weiter optimiert werden können. Es ergeben sich die oben genannten Vorteile hinsichtlich der Eigenschaften, wobei gleichzeitig die Anbindungswahrscheinlichkeit von beiden Silyl-Gruppen an eine Kieselsäureoberfläche weiter erhöht ist.

Die Gruppen X sind, wie zu Formel I) ausgeführt, ausgewählt aus den Gruppen -HNC(=O)-, -C(=O)NH-, -C(=O)O-, -OC(=O)-, -OC(=O)NH-, -HNC(=O)O-, -HNC(=O)NH-, -R³NC(=O)NR³-, -R³NC(=NR³)NR³-, -R³NC(=S)NR³-, wobei die Reste R³ innerhalb der Gruppe X gleich oder verschieden sein können und ausgewählt sind aus einem Wasserstoffatom oder ausgewählt sind aus der Gruppe bestehend aus linearen und verzweigten Alkylgruppen mit 1 bis 20 Kohlenstoffatomen, Cycloalkylgruppen mit 4 bis 12 Kohlenstoffatomen, Arylgruppen mit 6 bis 20 Kohlenstoffatomen, Alkenylgruppen mit 2 bis 20 Kohlenstoffatomen, Alkinylgruppen mit 2 bis 20 Kohlenstoffatomen und Aralkylgruppen mit 7 bis 20 Kohlenstoffatomen unter der Bedingung, dass wenigstens ein R³ innerhalb jeder Gruppe X ein Wasserstoffatom ist. Die Gruppen -HNC(=O)- und -C(=O)NH- sind Carbonsäureamidgruppen, wobei die beiden unterschiedlichen Schreibweisen die möglichen Konnektivitäten innerhalb des Moleküls zum Ausdruck bringen sollen. Es ist somit denkbar, dass das Stickstoffatom der Gruppe X in der Ausführung Säureamid an der aromatischen Gruppe A anknüpft oder an dem Rest R².

Die Gruppen -C(=O)O- und -OC(=O)- sind Estergruppen, wobei auch hier mit den beiden Schreibweisen analog zu den Säureamidgruppen die unterschiedlichen Konnektivitäten hinsichtlich A und R² gemeint sind.

Die Gruppen -OC(=O)NH- und -HNC(=O)O- sind Urethangruppen, wobei auch hier mit den beiden Schreibweisen analog zu den Säureamidgruppen die unterschiedlichen Konnektivitäten hinsichtlich A und R² gemeint sind.

Die Gruppe -R³NC(=O)NR³- stellt eine Harnstoffgruppe dar, wobei wenigstens einer der Reste R³ ein Wasserstoffatom ist.

Die Gruppe -R³NC(=NR³)NR³- stellt eine Guanidingruppe dar, wobei wenigstens einer der Reste R³ ein Wasserstoffatom ist.

Die Gruppe -R³NC(=S)NR³- stellt eine Thioharnstoffgruppe dar, wobei wenigstens einer der Reste R³ ein Wasserstoffatom ist.

Bevorzugt ist jedes der R³ der Gruppe X ein Wasserstoffatom.

Für den Fall, dass R³ ein organischer Rest ist, ist es besonders bevorzugt, wenn R³ ausgewählt ist aus Alkylresten mit 1 bis 7 Kohlenstoffatomen oder aromatischen Resten mit 6 bis 10 Kohlenstoffatomen, wie z. B. einem Phenylrest.

Bevorzugt ist es, dass die Gruppen X ausgewählt sind aus den Gruppen -HNC(=O)-, - C(=O)NH-, -OC(=O)NH-, -HNC(=O)O-, -R³NC(=O)NR³-, -R³NC(=NR³)NR³-, - R³NC(=S)NR³-, und zwar mit der oben genannten Bedingung für R³.

Besonders bevorzugt ist die Gruppe X ausgewählt aus den Gruppen -HNC(=O)-, - C(=O)NH-, -OC(=O)NH-, -HNC(=O)O-, -R³NC(=O)NR³-, wiederum bevorzugt aus den Gruppen -HNC(=O)-, -C(=O)NH-, -R³NC(=O)NR³-.

Gemäß einer besonders vorteilhaften Ausführungsform der Erfindung ist wenigstens ein X eine Harnstoffgruppe -HNC(=O)NH- (mit jedem R³ = Wasserstoffatom).

Gemäße einer besonders vorteilhaften Ausführungsform der Erfindung sind die beiden X innerhalb eines Moleküls gleich und eine Harnstoffgruppe -HNC(=O)NH-.

Die Gruppen Y können wie zu Formel I) ausgeführt innerhalb eines Moleküls gleich oder verschieden voneinander sein und sind ausgewählt aus den Gruppen -HNC(=O)- und -C(=O)NH-.

Die Gruppen A verbinden X und X sowie ggf. X und Y, wobei X und ggf. Y somit formal jeweils auch Substituenten der jeweiligen aromatischen Gruppe A sind.

Bei den aromatischen Gruppen A kann es sich prinzipiell um jede aromatische Gruppe handeln, wobei die A innerhalb eines Moleküls gleich oder verschieden zueinander sein können. Die aromatischen Gruppen A können hierbei Heteroatome enthalten und/oder an einem oder mehreren Atomen des aromatischen Gerüstes Substituenten (für ein jeweiliges Wasserstoffatom) tragen, und zwar zusätzlich zu den formelgemäßen Substituenten X und Y.

Bevorzugt ist es, dass die aromatischen Gruppen A unabhängig voneinander gleich oder verschieden sind und ausgewählt sind aus der Gruppe bestehend aus Phenylen-, Naphthylen-, Pyridylen-, Pyridazylen-, Pyrimidylen-, Pyrazylen-, Triazylen-, Chinolylen-, Pyrrolylen-, Furanylen-, Thiophenylen-, Pyrazolylen-, Imidazolylen-, Thiazolylen-, Oxazolylen-, Anthracenylen-, Phenantrenylen- und Acridinylen-Resten.

Die Verknüpfung der genannten Gruppen an der jeweiligen aromatischen Gruppe kann dabei über alle denkbaren Atome des aromatischen Gerüsts erfolgen. Bei einem monocyclischen Aromaten mit sechs Gerüstatomen wie einem Phenylenrest heißt das z. B., dass die Gruppen in para-, meta- oder ortho- Position zueinander angeordnet sein können.

Gemäß einer besonders vorteilhaften Ausführungsform der Erfindung sind die Gruppen A innerhalb eines Moleküls gleich und Phenylen-Reste.

Gemäß einer bevorzugten Ausführungsform der Erfindung sind X und X sowie X und Y im Fall von m = 1 oder 2 jeweils in para-Stellung zueinander an der jeweiligen aromatischen Gruppe A angeordnet.

Hierdurch ergibt sich eine längliche und partiell rigide Molekülstruktur des Silans, die insbesondere in einer Kautschukmischung zu einer weiteren Erhöhung von deren Steifigkeit beitragen kann.

Gemäß einer weiteren bevorzugten Ausführungsform der Erfindung sind X und X sowie X und Y im Fall von m = 1 oder 2 in para-Stellung zueinander an der jeweiligen aromatischen Gruppe A angeordnet.

Hierdurch ergibt sich eine partiell rigide Molekülstruktur des Silans, die insbesondere in einer Kautschukmischung zu einer Verbesserung von deren Eigenschaften beitragen kann.

Die Reste R¹ des erfindungsgemäßen Silans können innerhalb der Silylgruppe (R¹)ₒSi- unabhängig voneinander gleich oder verschieden voneinander sein und sind ausgewählt aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen, Arylgruppen mit 6 bis 20 Kohlenstoffatomen, Alkylgruppen mit 1 bis 10 Kohlenstoffatomen, Alkenylgruppen mit 2 bis 20 Kohlenstoffatomen, Alkinylgruppen mit 2 bis 20 Kohlenstoffatomen, Aralkylgruppen mit 7 bis 20 Kohlenstoffatomen, Halogeniden oder Alkylpolyethergruppen -O-(R⁶-O)ᵣ-R⁵ wobei R⁶ gleich oder verschieden sind und verzweigte oder unverzweigte, gesättigte oder ungesättigte, aliphatische, aromatische oder gemischt aliphatisch/aromatische verbrückende C₁-C₃₀-Kohlenwasserstoffgruppen sind, vorzugsweise -CH₂-CH₂-, r eine ganze Zahl von 1 bis 30, vorzugsweise 3 bis 10 ist, und R⁵ unsubstituierte oder substituierte, verzweigte oder unverzweigte, terminale Alkyl-, Alkenyl-, Aryl- oder Aralkylgruppen, vorzugsweise -C₁₃H₂₇ Alkyl-Gruppe, sind
oder
zwei R¹ bilden eine cyclische Dialkoxygruppe mit 2 bis 10 Kohlenstoffatomen,
oder es können zwei oder mehr Silane gemäß Formel I) über Reste R¹ verbrückt sein. Sämtliche genannten Reste R¹ und Verknüpfungen können innerhalb einer Silyl-Gruppe miteinander kombiniert sein.

Für den Fall, dass zwei Silane gemäß Formel I) miteinander verbrückt sind, teilen sie sich einen Rest R¹. Auf diese Weise können auch mehr als zwei Silane aneinander verknüpft sein. Im Anschluss an die Synthese des Silans gemäß Formel I) ist es somit denkbar, dass zwei Silane gemäß Formel I) über die Reste R¹ miteinander verbrückt werden. Auf diese Weise können auch mehr als zwei Silane aneinander verknüpft werden, wie beispielsweise über Dialkoxygruppen.

Das erfindungsgemäße Silan kann auch Oligomere umfassen, die durch Hydrolyse und Kondensation der Silane der Formel I) entstehen. Dabei sind zum einen Oligomere von zweien oder mehreren Silanen gemäß Formel I) umfasst. Erfindungsgemäß sind zum anderen auch Oligomere umfasst, die durch Kondensation wenigstens eines Silans gemäß Formel I) mit wenigstens einem weiteren Silan, welches nicht Formel I) entspricht, entstehen. Bei dem "weiteren Silan" kann es sich insbesondere um dem Fachmann bekannte Silan-Kupplungsagenzien handeln.

Das Silan gemäß Formel I) umfasst gemäß vorteilhafter Ausführungsform, insbesondere zur Verwendung des Silans in einer kieselsäurehaltigen Kautschukmischung, in jeder Silylgruppe (R¹)ₒSi- wenigstens einen Rest R¹, der als Abgangsgruppe dienen kann, wie insbesondere Alkoxy-Gruppen oder sämtliche andere der genannten Gruppen, die mit einem Sauerstoffatom an das Siliciumatom gebunden sind, oder Halogenide.

Es ist bevorzugt, dass die Reste R¹ Alkylgruppen mit 1 bis 6 Kohlenstoffatomen oder Alkoxygruppen mit 1 bis 6 Kohlenstoffatomen oder Halogenide umfassen, besonders bevorzugt sind Alkoxygruppen mit 1 bis 6 Kohlenstoffatomen oder Halogenide.

Gemäß einer besonders vorteilhaften Ausführungsform der Erfindung sind die Reste R¹ innerhalb einer Silylgruppe (R¹)ₒSi- gleich und Alkoxygruppen mit 1 oder 2 Kohlenstoffatomen, also Methoxygruppen oder Ethoxygruppen, ganz besonders bevorzugt Ethoxygruppen.

Aber auch bei Oligomeren oder im Fall, dass zwei R¹ eine Dialkoxy-Gruppe bilden, sind die übrigen Reste R¹ bevorzugt Alkylgruppen mit 1 bis 6 Kohlenstoffatomen oder Halogenide oder Alkoxygruppen mit 1 bis 6 Kohlenstoffatomen, bevorzugt 1 oder 2 Kohlenstoffatomen, also Methoxygruppen oder Ethoxygruppen, ganz besonders bevorzugt Ethoxygruppen.

Die Reste R² des erfindungsgemäßen Silans können innerhalb eines Moleküls unabhängig voneinander gleich oder verschieden voneinander sein und sind ausgewählt aus der Gruppe bestehend aus linearen und verzweigten Alkylengruppen mit 1 bis 20 Kohlenstoffatomen, Cycloalkylengruppen mit 4 bis 12 Kohlenstoffatomen, Arylengruppen mit 6 bis 20 Kohlenstoffatomen, Alkenylengruppen mit 2 bis 20 Kohlenstoffatomen, Alkinylengruppen mit 2 bis 20 Kohlenstoffatomen und Aralkylengruppen mit 7 bis 20 Kohlenstoffatomen.

Es ist bevorzugt, dass die Reste R² lineare oder verzweigte Alkylengruppe mit 2 bis 8 Kohlenstoffatomen oder eine Cycloalkylengruppe mit 4 bis 8 Kohlenstoffatomen, wie insbesondere ein Cyclohexylenrest, sind.

Gemäß einer besonders vorteilhaften Ausführungsform der Erfindung sind die Reste R² innerhalb eines Moleküls gleich und Alkylengruppen mit 2 bis 8 Kohlenstoffatomen, bevorzugt 2 bis 6 Kohlenstoffatomen, besonders bevorzugt mit 2 bis 4 Kohlenstoffatomen, insbesondere bevorzugt 2 oder 3 Kohlenstoffatome, wobei Propylenreste mit 3 Kohlenstoffatomen beispielsweise ganz besonders bevorzugt sind.

In einer nicht-erfindungsgemäßen Ausführungsform weist das Silan die folgende Formel II) auf:

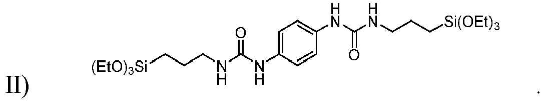

Hierbei sind im Hinblick auf Formel I) beide o gleich 3, m gleich 0, alle R¹ Ethoxygruppen, beide R² Propylenreste, beide X Harnstoffgruppen und A ein Phenylenrest, wobei die beiden X- Verknüpfungen in para-Stellung zueinander angeordnet sind.

Das Silan gemäß Formel II) stellt ein nicht-erfindungsgemäßes Beispiel dar. Hiermit wird ein besonders gutes Eigenschaftsprofil der Kautschukmischung erzielt. Letztere weist somit verbesserte Eigenschaften auf.

In einer besonders bevorzugten und beispielhaften Ausführungsform der Erfindung weist das erfindungsgemäße Silan die folgende Formel III) auf:

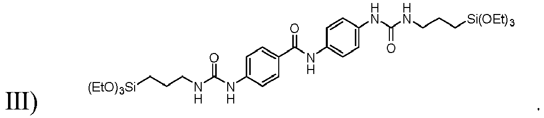

Hierbei sind im Hinblick auf Formel I) beide o gleich 3, alle R¹ Ethoxygruppen, beide R² Propylenreste, beide X Harnstoffgruppen sind, und m gleich 1, wobei beide A Phenylenreste sind und Y je nach Betrachtungsrichtung -HNC(=O)- oder -C(=O)NH- ist, wobei die Verknüpfungen an den Benzolringen jeweils in para-Stellung zueinander angeordnet sind.

Das Silan gemäß Formel III) stellt ein bevorzugtes erfindungsgemäßes Beispiel dar. Hiermit wird ein besonders gutes Eigenschaftsprofil der erfindungsgemäßen Kautschukmischung erzielt. Letztere weist somit verbesserte Eigenschaften auf.

In einer weiteren bevorzugten und beispielhaften Ausführungsform der Erfindung weist das erfindungsgemäße Silan die folgende Formel VIII) auf:

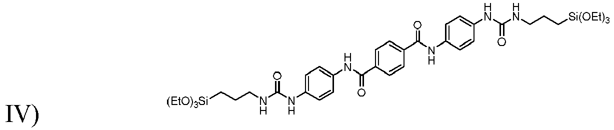

Hierbei sind im Hinblick auf Formel I) beide o gleich 3, alle R¹ Ethoxygruppen, beide R² Propylenreste, beide X Harnstoffgruppen sind, und m gleich 2, wobei alle drei A Phenylenreste sind und ein Y je nach Betrachtungsrichtung -HNC(=O)- oder -C(=O)NH- und das andere entsprechend spiegelverkehrt ist, wobei die Verknüpfungen an den Benzolringen jeweils in para-Stellung zueinander angeordnet sind.

Ein weiterer Gegenstand der vorliegenden Erfindung ist ein Verfahren zur Herstellung des erfindungsgemäßen Silans gemäß Formel I) mit m 1.

Das erfindungsgemäße Verfahren umfasst für den Fall, dass m gleich 1 ist, wenigstens die folgenden Verfahrensschritte:
a) Bereitstellung einer Substanz (R¹)ₒSi-R²-N=C=O ;
b) Bereitstellung einer Substanz H₂N-A-[Y-A]ₘ-NH₂ mit m 1 ;
c) Umsetzung der Substanz aus Schritt a) mit der Substanz aus Schritt b) zu (R¹)ₒSi-R²-X-A-[Y-A]ₘ-X-R²-Si(R¹)ₒ mit m gleich 0 oder 1.
d) Optional Aufreinigung des in Schritt c) erhaltenen Silans.

Ein weiterer Gegenstand der vorliegenden Erfindung ist ein Verfahren zur Herstellung des erfindungsgemäßen Silans gemäß Formel I) mit m gleich 2.

Das erfindungsgemäße Verfahren umfasst für den Fall, dass m gleich 2 ist, wenigstens die folgenden Verfahrensschritte:
aa) Bereitstellung einer Substanz (R¹)ₒSi-R²-X-A-NH₂;
bb) Bereitstellung einer Substanz C1C(=O)-A-C(=O)C1;
cc) Umsetzung der Substanz aus Schritt aa) mit der Substanz aus Schritt bb) zu (R¹)ₒSi-R²-X-A-[Y-A]ₘ-X-R²-Si(R¹)ₒ mit m gleich 2
dd) Optional Aufreinigung des in Schritt cc) erhaltenen Silans.

Für die Reste R¹, R², R³ und o sowie X und A und Y gelten bei beiden Verfahrensoptionen die obigen Ausführungen sofern nicht ausdrücklich anders angegeben.

Die Substanzen gemäß Schritt a) und b) bzw. aa) und bb) können kommerziell erworben und bereitgestellt werden.

Die Umsetzung gemäß Schritt c) oder cc) erfolgt bevorzugt in einem organischen Lösungsmittel, wie beispielsweise Tetrahydrofuran (THF), Dimethylformamid (DMF), Dimethylsulfoxid (DMSO) oder 1,4-Dioxan, bevorzugt THF.

Bevorzugt findet die Reaktion gemäß Schritt c) oder cc) unter Schutzgasatmosphäre, wie beispielsweise unter Argon statt. Das Reaktionsgemisch wird bevorzugt über mehrere Stunden, beispielsweise 2 bis 12 Stunden, unter Reflux gerührt und anschließend abgekühlt.

Gemäß Verfahrensschritt d) oder dd) erfolgt optional die Aufreinigung des in Schritt c) oder cc) erhaltenen Silans gemäß Formel I), wobei sich die Art der Aufreinigung danach bestimmt, in welchem Aggregatzustand das Silan anfällt.

Es ist aber auch denkbar, das hergestellte Silan ohne einen Aufreinigungsschritt weiter zu verwenden, wie beispielsweise auf Kieselsäure aufzuziehen, wie unten beschrieben.

Ein weiterer Gegenstand der vorliegenden Erfindung ist eine Kieselsäure, die mit wenigstens einem erfindungsgemäßen Silan zumindest an deren Oberfläche modifiziert ist. Beispielsweise erfolgt die Modifizierung durch wenigstens folgende Verfahrensschritte:
e) Optional Lösen des erfindungsgemäßen Silans gemäß Formel I) aus Schritt c) oder d) bzw. cc) oder dd) in einem organischen Lösungsmittel;
f) Inkontaktbringen wenigstens einer Kieselsäure mit dem Silan aus Schritt c) oder d) bzw. cc) oder dd) oder der Lösung aus Schritt e) und anschließendes Rühren der entstandenen Suspension, bevorzugt für 30 Minuten bis 18 Stunden;
g) Trocknen der erhaltenen modifizierten Kieselsäure.

Bei der Kieselsäure kann es sich um jegliche dem Fachmann bekannte Kieselsäure handeln, wie insbesondere die unten näher aufgeführten Kieselsäuretypen.

Diese weiteren Verfahrensschritte stellen eine Modifizierung von Kieselsäure mit dem erfindungsgemäß hergestellten Silan dar und sind ein weiterer Aspekt der vorliegenden Erfindung.

Die erfindungsgemäße Kautschukmischung enthält wenigstens ein erfindungsgemäßes Silan. Es ist prinzipiell denkbar, dass die Kautschukmischung mehrere erfindungsgemäße Silane unterschiedlicher Ausführungsformen, also mit ggf. unterschiedlichen Gruppen X, Y, A sowie R¹, R², unterschiedlichen Verknüpfungen an den aromatischen Gruppen A, sowie mit unterschiedlichen Werten m im Gemisch enthält. Insbesondere kann die Kautschukmischung auch ein Gemisch zweier oder mehrerer Silane I), II), III) oder IV) enthalten. Die Kautschukmischung kann das erfindungsgemäße Silan gemäß den gezeigten Formeln I) bis IV) auch in Kombination mit anderen im Stand der Technik bekannten Silanen enthalten, ggf. als Oligomere, wie oben beschrieben.

Solche aus dem Stand der Technik bekannten Kupplungsagenzien sind insbesondere und beispielsweise bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:
-SCN, -SH, -NH₂ oder -Sx- (mit x = 2 bis 8).

So können als Silan-Kupplungsagenzien z. B. 3-Mercaptopropyltriethoxysilan, 3-Thiocyanato-propyltrimethoxysilan oder 3,3 `-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S^{®} der Firma Evonik) zugesetzt werden.

Im Stand der Technik bekannt ist auch ein Silan-Gemisch, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 266^{®} der Firma Evonik erhältlich, welches z.B. in der DE 102006004062 A1 beschrieben ist.

Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT (z.B. 3-(Octanoylthio)-1-Propyl-Triethoxysilan) in verschiedenen Varianten von der Firma Momentive, USA, oder solche, die unter dem Namen VP Si 363^{®} von der Firma Evonik Industries vertrieben werden.

Ferner können zusätzlich eingangs beschriebene Silane, die nur an Füllstoffe wie Kieselsäure anbinden enthalten sein.

Gemäß einer nicht-erfindungsgemäßen Ausführungsform enthält die Kautschukmischung das Silan gemäß Formel II). Hiermit wird ein besonders gutes Eigenschaftsprofil zur Lösung der technischen Aufgabe erzielt.

Gemäß einer besonders vorteilhaften Ausführungsform der Erfindung enthält die Kautschukmischung das Silan gemäß Formel III). Hiermit wird ein besonders gutes Eigenschaftsprofil zur Lösung der technischen Aufgabe erzielt.

Gemäß einer besonders vorteilhaften Ausführungsform der Erfindung enthält die Kautschukmischung das Silan gemäß Formel IV). Hiermit wird ein besonders gutes Eigenschaftsprofil zur Lösung der technischen Aufgabe erzielt.

Bei der erfindungsgemäßen Kautschukmischung handelt es sich bevorzugt um eine Kautschukmischung, die für den Einsatz in Fahrzeugreifen geeignet ist und hierzu bevorzugt wenigstens einen Dienkautschuk enthält.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Der Dienkautschuk ist dabei ausgewählt aus der Gruppe bestehend aus natürlichem Polyisopren und/oder synthetischem Polyisopren und/oder epoxidiertem Polyisopren und/oder Butadien-Kautschuk und/oder Butadien-Isopren-Kautschuk und/oder lösungspolymerisiertem Styrol-Butadien-Kautschuk und/oder emulsionspolymerisiertem Styrol-Butadien-Kautschuk und/oder Styrol-Isopren-Kautschuk und/oder Flüssigkautschuken mit einem Molekulargewicht M_{w} von größer als 20000 g/mol und/oder Halobutyl-Kautschuk und/oder Polynorbornen und/oder Isopren-Isobutylen-Copolymer und/oder Ethylen-Propylen-Dien-Kautschuk und/oder Nitril-Kautschuk und/oder Chloropren-Kautschuk und/oder Acrylat-Kautschuk und/oder Fluor-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydriertem AcrylnitrilbutadienKautschuk und/oder hydriertem Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, und/oder Schuhsohlen zum Einsatz.

Vorzugsweise ist der Dienkautschuk ausgewählt aus der Gruppe bestehend aus natürlichem Polyisopren und/oder synthetischem Polyisopren und/oder Butadien-Kautschuk und/oder lösungspolymerisiertem Styrol-Butadien-Kautschuk und/oder emulsionspolymerisiertem Styrol-Butadien-Kautschuk.

Gemäß einer bevorzugten Weiterbildung der Erfindung werden in der Kautschukmischung wenigstens zwei verschiedene Dienkautschuk-Typen eingesetzt.

Die erfindungsgemäße Kautschukmischung enthält als Füllstoff bevorzugt wenigstens eine Kieselsäure, wodurch die Vorteile des erfindungsgemäßen Silans besonders hervortreten. Wird das wenigstens eine erfindungsgemäße Silan der erfindungsgemäßen Kautschukmischung auf einer Kieselsäure aufgezogen zugegeben, so kann die Kautschukmischung weitere Kieselsäuren enthalten.

Die Begriffe "Kieselsäure" und "Silika" werden im Rahmen der vorliegenden Erfindung synonym verwendet.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 400 m²/g, bevorzugt von 35 bis 350 m²/g, besonders bevorzugt von 100 bis 320 m²/g und ganz besonders bevorzugt von 100 bis 235 m²/g, und eine CTAB-Oberfläche (gemäß ASTM D 3765) von 30 bis 400 m²/g, bevorzugt von 30 bis 330 m²/g, besonders bevorzugt von 95 bis 300 m²/g und ganz besonders bevorzugt von 95 bis 200 m²/g, aufweist. Derartige Kieselsäuren führen z. B. in Kautschukmischungen für innere Reifenbauteile zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil^{®} VN3 (Handelsname) der Firma Evonik als auch Kieselsäuren mit einer vergleichsweise niedrigen BET-Oberfläche (wie z. B. Zeosil^{®} 1115 oder Zeosil^{®} 1085 der Firma Solvay) als auch hoch dispergierbare Kieselsäuren, so genannte HD-Kieselsäuren (z. B. Zeosil^{®} 1165 MP der Firma Solvay).

Die Menge der wenigstens einen Kieselsäure beträgt dabei bevorzugt 5 bis 300 phr, besonders bevorzugt 10 bis 200 phr, ganz besonders bevorzugt 20 bis 180 phr. Im Falle unterschiedlicher Kieselsäuren ist mit den angegebenen Mengen die Gesamtmenge an enthaltenen Kieselsäuren gemeint.

Die in dieser Schrift verwendete Angabe phr (parts per hundred parts of rubber by weight) ist die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen (Mw größer als 20.000 g/mol) und dadurch festen Kautschuke bezogen.

Die in dieser Schrift verwendete Angabe phf (parts per hundred parts of filler by weight) ist die in der Kautschukindustrie gebräuchliche Mengenangabe für Kupplungsagenzien für Füllstoffe. Im Rahmen der vorliegenden Anmeldung bezieht sich phf auf die vorhandene Kieselsäure, das heißt, dass andere eventuell vorhandene Füllstoffe wie Ruß nicht in die Berechnung der Silanmenge mit eingehen.

Bevorzugt enthält die erfindungsgemäße Kautschukmischung wenigstens ein Silan der Formel I), bevorzugt wenigstens das Silan gemäß Formel II) und/oder Formel III) und/oder Formel VIII) in einer Menge von 1 bis 25 phr und im bevorzugten Fall mit Kieselsäure als Füllstoff bevorzugt 2 bis 20 phf.

Das oder die erfindungsgemäßen Silane werden bei der Herstellung der erfindungsgemäßen Kautschukmischung bevorzugt in wenigstens einer Grundmischstufe zugegeben, die bevorzugt wenigstens einen Dienkautschuk und bevorzugt wenigstens eine Kieselsäure als Füllstoff enthält.

Ein weiterer Gegenstand der vorliegenden Erfindung ist somit ein Verfahren zur Herstellung der erfindungsgemäßen Kautschukmischung, wobei wenigstens ein erfindungsgemäßes Silan wie vorstehend beschrieben bevorzugt in wenigstens einer Grundmischstufe zugegeben wird.

Gemäß einer vorteilhaften Ausführungsform der Erfindung wird das wenigstens eine erfindungsgemäße Silan zuvor auf Kieselsäure aufgezogen und in dieser Form in die Kautschukmischung eingemischt.

Bei dem erfindungsgemäßen Verfahren zur Herstellung der erfindungsgemäßen Kautschukmischung ist es somit bevorzugt, wenn das wenigstens eine erfindungsgemäße Silan zuvor auf Kieselsäure aufgezogen und in dieser Form in die Kautschukmischung eingemischt wird.

Die Kautschukgrundmischung enthaltend wenigstens ein erfindungsgemäßes Silan und/oder eine erfindungsgemäße Kieselsäure wird anschließend durch Zugabe von Vulkanisationschemikalien, s. unten insbesondere ein Schwefelvulkanisationssystem, zu einer Kautschukfertigmischung verarbeitet und im Anschluss vulkanisiert, wodurch ein erfindungsgemäßes Vulkanisat der erfindungsgemäßen Kautschukmischung erhalten wird.

Die erfindungsgemäße Kautschukmischung kann Ruß als weiteren Füllstoff enthalten, und zwar bevorzugt in Mengen von 2 bis 200 phr, besonders bevorzugt 2 bis 70 phr.

Die erfindungsgemäße Kautschukmischung kann, bevorzugt möglichst geringe Mengen d.h. bevorzugt 0 bis 3 phr, weitere Füllstoffe enthalten. Zu den weiteren (nicht verstärkenden) Füllstoffen zählen im Rahmen der vorliegenden Erfindung Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).

Weitere ggf. verstärkende Füllstoffe sind z.B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filier".

Zinkoxid gehört im Rahmen der vorliegenden Erfindung nicht zu den Füllstoffen.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N`-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) und/oder sonstige Aktivatoren, wie Zinkkomplexe wie z.B. Zinkethylhexanoat,
c) Ozonschutzwachse,
d) Harze, insbesondere Klebharze für innere Reifenbauteile,
e) Mastikationshilfsmittel, wie z. B. 2,2'-Dibenzamidodiphenyldisulfid (DBD) und
f) Prozesshilfsmittel, wie insbesondere Fettsäureester und Metallseifen, wie z.B. Zinkseifen und/oder Calciumseifen
g) Weichmacher, wie insbesondere wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polycyclischen Aromaten von weniger als 3 Gew.-% gemäß Methode IP 346 oder Triglyceride, wie z. B. Rapsöl, oder Faktisse oder Kohlenwasserstoffharze oder Flüssig-Polymere, deren mittleres Molekulargewicht (Bestimmung per GPC = gel permeation chromatography, in Anlehnung an BS ISO 11344:2004) zwischen 500 und 20000 g/mol liegt, wobei Mineralöle als Weichmacher besonders bevorzugt sind.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Der Mengenanteil der Gesamtmenge an weiteren Zusatzstoffen beträgt bevorzugt 3 bis 150 phr, besonders bevorzugt 3 bis 100 phr und ganz besonders bevorzugt 5 bis 80 phr.

Im Gesamtmengenanteil der weiteren Zusatzstoffe kann Zinkoxid (ZnO) in den oben genannten Mengen enthalten sein.

Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch ein Zinkoxid mit einer BET-Oberfläche von 10 bis 100 m²/g, wie z.B. so genannte "nano-Zinkoxide", verwendet werden.

Die Vulkanisation der erfindungsgemäßen Kautschukmischung wird bevorzugt in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS) oder eines Guanidin-Beschleunigers wie Diphenylguanidin (DPG).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B.

DipDis (Bis-(Diisopropyl)thiophosphoryldisulfid) und/oder Bis(O,O-2-ethylhexyl-thiophosphoryl)Polysulfid (z. B. Rhenocure SDT 50^{®}, Rheinchemie GmbH) und/oder Zinkdichloryldithiophosphat (z. B. Rhenocure ZDT/S^{®}, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger.

Besonders bevorzugt ist die Verwendung der Beschleuniger TBBS und/oder CBS und/oder Diphenylguanidin (DPG).

Außerdem können in der Kautschukmischung Vulkanisationsverzögerer vorhanden sein.

Die Begriffe "vulkanisiert" und "vernetzt" werden im Rahmen der vorliegenden Erfindung synonym verwendet.

Gemäß einer bevorzugten Weiterbildung der Erfindung werden bei der Herstellung der schwefelvernetzbaren Kautschukmischung mehrere Beschleuniger in der Fertigmischstufe zugegeben.

Die Herstellung der erfindungsgemäßen schwefelvernetzbaren Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang oder Kalandrieren weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die oben beschriebene erfindungsgemäße Kautschukmischung ist besonders für die Verwendung in Fahrzeugreifen, insbesondere Fahrzeugluftreifen geeignet. Hierbei ist die Anwendung in allen Reifenbauteilen prinzipiell denkbar, insbesondere in einem Laufstreifen, insbesondere in der Cap eines Laufstreifens mit CapBase-Konstruktion.

Die Cap ist hierbei der Teil des Laufstreifens des Fahrzeugreifens, der mit der Fahrbahn in Berührung kommt, während die Base der radial darunter befindliche innere Teil des Laufstreifens ist, der nicht mit der Fahrbahn in Berührung kommt.

Zur Verwendung in Fahrzeugreifen wird die Mischung als Fertigmischung vor der Vulkanisation bevorzugt in die Form eines Laufstreifens gebracht und bei der Herstellung des Fahrzeugreifenrohlings wie bekannt aufgebracht.

Die Herstellung der erfindungsgemäßen Kautschukmischung zur Verwendung als Seitenwand oder sonstige Body- Mischung in Fahrzeugreifen erfolgt wie bereits beschrieben. Der Unterschied liegt in der Formgebung nach dem Extrusionsvorgang bzw. dem Kalandrieren der Mischung. Die so erhaltenen Formen der noch unvulkanisierten Kautschukmischung für eine oder mehrere unterschiedliche Body-Mischungen dienen dann dem Aufbau eines Reifenrohlings.

Als Body-Mischung werden hierbei die Kautschukmischungen für die inneren Bauteile eines Reifen, wie im Wesentlichen Squeegee, Innenseele (Innenschicht), Kernprofil, Gürtel, Schulter, Gürtelprofil, Karkasse, Wulstverstärker, Wulstprofil, Hornprofil und Bandage. Der noch unvulkanisierte Reifenrohling wird anschließend vulkanisiert.

Zur Verwendung der erfindungsgemäßen Kautschukmischung in Riemen und Gurten, insbesondere in Fördergurten, wird die extrudierte noch unvulkanisierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

Ein weiterer Gegenstand der vorliegenden Erfindung ist ein Fahrzeugreifen, der die erfindungsgemäße Kautschukmischung enthaltend wenigstens ein erfindungsgemäßes Silan in wenigstens einem Bauteil aufweist.

Der vulkanisierte Fahrzeugreifen weist wenigstens in einem Bauteil ein Vulkanisat wenigstens einer erfindungsgemäßen Kautschukmischung auf. Dem Fachmann ist bekannt, dass die meisten Substanzen, wie z. B. die enthaltenen Kautschuke und Silane, insbesondere das erfindungsgemäße Silan, entweder bereits nach dem Mischen oder erst nach der Vulkanisation in chemisch veränderter Form vorliegen.

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Bevorzugt weist der erfindungsgemäße Fahrzeugreifen die erfindungsgemäße Kautschukmischung wenigstens im Laufstreifen auf.

Bevorzugt weist der erfindungsgemäße Fahrzeugreifen die erfindungsgemäße Kautschukmischung wenigstens in der Seitenwand auf.

Die erfindungsgemäße Kautschukmischung ist ferner auch für andere Bauteile von Fahrzeugreifen geeignet, wie z. B. insbesondere dem, Hornprofil, sowie innere Reifenbauteile. Die erfindungsgemäße Kautschukmischung ist ferner auch für andere technische Gummiartikel, wie Bälge, Förderbänder, Luftfedern, Gurte, Riemen oder Schläuche, sowie Schuhsohlen geeignet.

Im Folgenden soll die Erfindung anhand von Ausführungsbeispielen näher erläutert werden. Das Silan gemäß Formel II) als nicht-erfindungsgemäßes Beispiel wurde auf folgende Weise hergestellt:

### 1. Herstellung des Silans gemäß Formel II) (1,1'-(1,4-phenylen)-bis-(3-(3-(triethoxysilyl)propyl)harnstoff)) nach dem Syntheseschema gemäß Formel V)

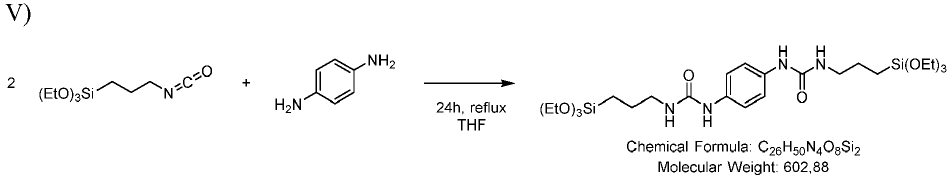

Zu einer Lösung von para-Phenylendiamin (0.50 g, 4.6 mmol, 1.0 Äquivalent (Äq.)) in Tetrahydrofuran (THF) (30 mL) wurde unter Argonatmosphäre bei Raumtemperatur (RT) tropfenweise 3-(Isocyanatopropyl)-triethoxysilan (2.9 mL, 2.86 g, 11.6 mmol, 2.5 Äq.) gegeben und das Reaktionsgemisch wurde unter Reflux über Nacht gerührt. Anschließend wurde das Reaktionsgemisch auf RT abgekühlt und der entstandene farblose Niederschlag wurde abfiltriert und mit kaltem THF (2 x 20 mL) gewaschen.Nach Trocknen des Niederschlags am Hochvakuum konnte die Zielverbindung in Form eines farblosen Pulvers (1.97 g, 3.3 mmol, 71 %) isoliert werden.

¹H-NMR (*engl.* "nuclear magnetic resonance") (500 MHz, DMSO-*d*₆) δ 8.13 (s, 2 H, -CH₂NHC(O)NH-), 7.20 (s, 4 H, Hₐᵣₒₘ), 6.03 (t, *J* = 5.7 Hz, 2 H, -CH₂NHC(O)NH-), 3.75 (q, *J* = 7.0 Hz, 12 H, -SiOCH₂CH₃), 3.03 (q, *J* = 6.6 Hz, 4 H, -SiCH₂CH₂CH₂-), 1.53 - 1.38 (m, 4 H, -SiCH₂CH₂CH₂-), 1.15 (t, *J* = 7.0 Hz, 18 H, -SiOCH₂CH₃), 0.61 - 0.48 (m, 4 H, -SiCH₂CH₂CH₂-).

¹³C-NMR (126 MHz, DMSO-*d*₆) δ 155.30, 134.27, 118.32, 57.66, 41.73, 23.36, 18.18, 7.23.

ESI-MS (Elektrosprayionisation Massenspektrometrie) *m*/*z* (%): 603.3 [M+H]⁺ (100), 625.3 [M+Na]⁺ (19).

Elementaranalyse (%) (berechnet): C, 51.84 (51.80); H, 8.25 (8.36); N, 9.36 (9.29). Schmelzpunkt: 199 °C.

Das Silan gemäß Formel III) als erfindungsgemäßes Beispiel wurde auf folgende Weise hergestellt:

### 2. Herstellung des Silans gemäß Formel III) (4-(3-(3-(triethoxysilyl)propyl)ureido)-N-(4-(3-(3-(triethoxysilyl)propyl)ureido)phenyl)-benzamid) nach dem Syntheseschema gemäß Formel VI

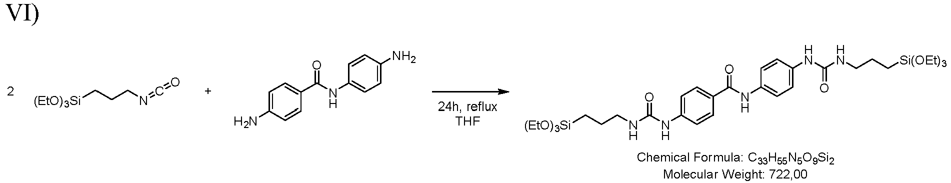

Zu einer Lösung von 4,4'-Diaminobenzanilid (1.00 g, 4.4 mmol, 1.0 Äq.) in THF (30 mL) wurde unter Argonatmosphäre bei Raumtemperatur tropfenweise 3-(Isocyanatopropyl)-triethoxysilan (2.7 mL, 2.72 g, 11.0 mmol, 2.5 Äq.) gegeben und das Reaktionsgemisch wurde unter Reflux über Nacht gerührt. Anschließend wurde das Reaktionsgemisch auf RT abgekühlt und der entstandene hellbraune Niederschlag wurde abfiltriert und mit kaltem THF (2 x 20 mL) gewaschen.

Nach Trocknen des Niederschlags am Hochvakuum konnte die Zielverbindung in Form eines hellbraunen Pulvers (2.60 g, 3.6 mmol, 82 %) isoliert werden.
¹H-NMR (500 MHz, DMSO-*d*₆) δ 9.86 (s, 1 H, -C(O)NH-), 8.72 (s,
1 H, -CH₂NHC(O)NH-), 8.30 (s, 1 H, -CH₂NHC(O)NH-), 7.84 (d, *J* = 8.8 Hz, 2 H, Hₐᵣₒₘ), 7.58 (d, *J* = 9.0 Hz, 2 H, Hₐᵣₒₘ), 7.49 (d, *J* = 8.8 Hz, 2 H, Hₐᵣₒₘ), 7.32 (d, *J* = 9.0 Hz, 2 H, Hₐᵣₒₘ), 6.29 (t, *J* = 5.7 Hz, 1 H, -CH₂NHC(O)NH-), 6.11 (t, *J* = 5.7 Hz,
1 H, -CH₂NHC(O)NH-), 3.75 (q, *J* = 7.0 Hz, 12 H, -SiOCH₂CH₃), 3.06 (dd, *J* = 12.2, 6.1 Hz, 4 H, -SiCH₂CH₂CH₂-), 1.56 - 1.41 (m, 4 H, -SiCH₂CH₂CH₂-), 1.15 (t, *J=* 7.0 Hz, 18 H, -SiOCH₂CH₃), 0.62 - 0.48 (m, 4 H, -SiCH₂CH₂CH₂-).
¹³C-NMR (126 MHz, DMSO-*d*₆) δ 164.51, 155.22, 154.83, 143.56, 136.27, 132.88, 128.48, 126.96, 120.97, 117.72, 116.45, 57.69, 41.75, 23.36, 23.25, 18.20, 7.25.
ESI-MS *m*/*z* (%): 676.3 [M+H-EtOH]⁺ (19), 744.3 [M+Na]⁺ (48).

Elementaranalyse (%) (berechnet): C, 54.95 (54.90); H, 7.54 (7.68); N, 9.87 (9.70). Zersetzungstemperatur: >250 °C.

Das Silan gemäß Formel IV) als erfindungsgemäßes Beispiel wurde auf folgende Weise hergestellt:

### 3. Herstellung des Silans gemäß Formel IV) (N1,N4-bis(4-(3-(3-(triethoxysilyl)propyl)ureido)phenyl)-terephthalamid) nach dem Syntheseschema gemäß Formel VII)

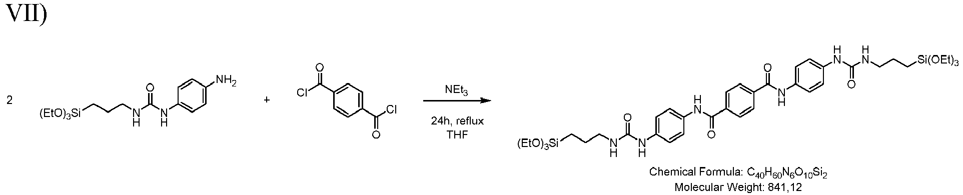

Zu einer Lösung von 1-(4-Aminophenyl)-3-(3-(triethoxysilyl)propyl)-harnstoff (3.50 g, 9.9 mmol, 2.5 Äq.) in THF (30 mL) wurde unter Argonatmosphäre bei Raumtemperatur Triethylamin (2.7 mL, 1.99 g, 19.7 mmol, 5.0 Äq.) gegeben. Anschließend wurde Terephthaloylchlorid (0.80 g, 3.9 mmol, 1.0 Äq.) in einer Portion zugefügt und das Reaktionsgemisch wurde unter Reflux über Nacht gerührt. Anschließend wurde das Reaktionsgemisch auf RT abgekühlt und der entstandene hellbraune Niederschlag wurde abfiltriert und mit dem Wasser (4 x 20 mL) gewaschen.

Nach Trocknen des Niederschlags am Hochvakuum konnte die Zielverbindung in Form eines hellbraunen Pulvers (2.80 g, 3.3 mmol, 84 %) isoliert werden.
¹H-NMR (500 MHz, DMSO-*d*₆) δ 10.23 (s, 2 H, -C(O)NH-), 8.36 (s,
2 H, -CH₂NHC(O)NH-), 8.07 (s, 4 H, Hₐᵣₒₘ), 7.63 (d, *J* = 8.8 Hz, 4 H, Hₐᵣₒₘ), 7.37 (d, *J* = 9.0 Hz, 4 H, Hₐᵣₒₘ), 6.14 (t, *J* = 5.8 Hz, 2 H, -CH₂NHC(O)NH-), 3.76 (q, *J* = 7.0 Hz, 12 H, -SiOCH₂CH₃), 3.06 (q, *J* = 6.6 Hz, 4 H, -SiCH₂CH₂CH₂-), 1.53 - 1.43 (m, 2 H, -SiCH₂CH₂CH₂-), 1.16 (t, *J* = 7.0 Hz, 18 H, -SiOCH₂CH₃), 0.65 - 0.50 (m, 4 H, -SiCH₂CH₂CH₂-).
¹³C-NMR (126 MHz, DMSO-*d*₆) δ 164.77, 155.69, 137.86, 137.24, 132.89, 128.02, 121.64, 118.20, 58.19, 42.25, 23.85, 18.70, 7.75.
ESI-MS *m*/*z* (%): 795.4 [M+H-EtOH]⁺ (45), 863.4 [M+Na]⁺ (33).

Elementaranalyse (%) (berechnet): C, 56.31 (57.12); H, 7.05 (7.19); N, 10.08 (9.99). Zersetzungstemperatur: >250 °C.

Das hergestellte Silan gemäß Formel II) und/oder III) und/oder IV) wird in eine Kautschukmischung enthaltend wenigstens einen Dienkautschuk und wenigstens eine Kieselsäure als Füllstoff eingemischt. Bevorzugt wird das Silan gemäß Formel II) und/oder III) und/oder IV) hierzu zuvor auf eine Kieselsäure aufgezogen und anschließend in dieser Form der Kautschukmischung zugegeben.

Das Aufziehen auf Kieselsäure erfolgt z. B. folgendermaßen:
Zu einer Suspension von Kieselsäure, z. B. granulierter Kieselsäure, in DMF wird bei Raumtemperatur eine Lösung des Silans gemäß Formel II und/oder III) und/oder VIII) in dem gewünschten Verhältnis Kieselsäure / Silan gelöst in DMF gegeben. Beispielsweise werden Kieselsäure (VN3, Firma Evonik) und bis zu 9,2 phf des Silans gemäß Formel II) oder bis zu 11,0 phf des Silans gemäß Formel III) oder bis zu 12,8 phf des Silans gemäß Formel VIII) verwendet.

Die entstehende Suspension wird beispielsweise über Nacht bei 120 °C gerührt und anschließend wird das Lösungsmittel unter vermindertem Druck entfernt. Nach einem Tag Trocknen am Hochvakuum bei 40 °C wird die so erhaltene modifizierte Kieselsäure ggf. je nach gewünschter Feinheit mittels Mörser zerkleinert. Anschließend wird beispielsweise einen weiteren Tag bei 40 °C am Hochvakuum getrocknet.

Die erfindungsgemäße Kautschukmischung wird beispielsweise in Form eines vorgeformten Laufstreifens eines Fahrzeugreifens (wie oben beschrieben) auf einen Reifenrohling aufgebracht und anschließend mit diesem vulkanisiert.

Die Erfindung soll weiterhin anhand von Vergleichs- und Ausführungsbeispielen von Kautschukmischungen, die in Tabelle 1 zusammengefasst sind, näher erläutert werden. Die Vergleichsmischungen sind mit V, die nicht-erfindungsgemäßen Mischungen sind mit E gekennzeichnet. Die Mengenangabe der Silane in phf bezieht sich die jeweilige Menge an Kieselsäure.

Die Mischungsherstellung erfolgte unter üblichen Bedingungen in mehreren Stufen in einem Doppelschneckenextrusionsmischer. Aus sämtlichen Mischungen wurden Prüfkörper durch Vulkanisation hergestellt und mit diesen Prüfkörpern für die Kautschukindustrie typische Materialeigenschaften bestimmt.

Für die beschriebenen Tests an Prüfkörpern wurden folgende Testverfahren angewandt:
- Norm: ISO 868, DIN 53 505; Shore-A-Härte bei Raumtemperatur und 70 °C.
- Norm: ISO 4662, DIN 53 512; Rückprallelastizität bei Raumtemperatur und 70 °C.
- Norm: DIN 53 513; Verlustfaktor tan δ bei 55 °C
- Norm: ISO 37, ASTM D 412, DIN 53 504; Spannungswert (Modul) bei 100 und 300 % Dehnung und Reißdehnung bei Raumtemperatur.
- Norm: DIN/ISO 4649; Abrieb bei Raumtemperatur
   a) NR TSR: Naturkautschuk.
   b) Polybutadien: Europrene Neocis BR 40, Fa. Polimeri
   c) SSBR: lösungspolymerisiertes Styrol-Butadien-Copolymer aus dem Stand der Technik mit Hydroxy-Gruppen, Nipol(R) NS 612, Fa. Zeon Corporation.
   d) Kieselsäure: VN3, Fa. Evonik.
   e) Silan wurde in der entsprechenden Menge mit der genannten Kieselsäure in einem separaten Schritt vorsilanisiert / zur Reaktion gebracht. Kieselsäure und Silan wurden zusammen als modifizierter Füllstoff dem Mischprozess zugeführt.
   f) Weitere Zusatzstoffe: Zinkoxid / Alterungsschutzmittel / Ozonschutzmittel / Stearinsäure.

Die nicht-erfindungsgemäßen Mischungen E1 - E3 (enthaltend TESPD und das Silan gemäß Formel II) in den Verhältnissen 90:10, 70:30 und 50:50) zeigen im Vergleich mit der Referenzmischung V1 eine verringerte Rückprallelastizität RT und 70°C, wobei bei E1 eine Vergrößerung der Differenz (Rb 70°C - Rb RT) vorteilhaft für den Zielkonflikt zwischen Rollwiderstand und Gripverhalten ist. Ebenso bewirkt die Zugabe des Silans eine Verringerung des Verlustfaktors bei 55°C für E1 - E3 im Vergleich zu V1. Diese Eigenschaften zeigen dem Fachmann eine Verbesserung des Rollwiderstandes in der Reifenanwendung.

Als Prediktor für gesteigerte Steifigkeit ist für E1 - E3 im Vergleich mit V1 eine deutliche Erhöhung der Shore A-Härte bei RT und 70 °C mit erhöhtem Anteil des Silans zu beobachten. Ebenso zeigt sich beim DIN Abrieb eine gesteigerte Haltbarkeit durch den Zusatz des Silans gemäß Formel II).

Zudem zeigt sich, dass bereits geringe Beimengungen des Silans - beispielsweise gemäß Formel II - zusätzlich zu einer Verbesserung des Rollwiderstandverhaltens und einer signifikanten Steifigkeitserhöhung führen.

| **Bestandteile** | **Einheit** | **V1** | **E1** | **E2** | **E3** |
|---|---|---|---|---|---|
| NR TSR a) | phr | 10 | 10 | 10 | 10 |
| BR b) | phr | 18 | 18 | 18 | 18 |
| SSBR c) | phr | 72 | 72 | 72 | 72 |
| Kieselsäure d) | phr | 85 | 85 | 85 | 85 |
| Silan TESPD e) | phf | 7.20 | 6.48 | 5.04 | 3.60 |
| Silan gemäß Formel II e) | phf | - | 0.78 | 2.33 | 3.88 |
| TDAE | phr | 35 | 35 | 35 | 35 |
| Weitere Zusatzstoffe f) | phr | 9 | 9 | 9 | 9 |
| DPG | phr | 2 | 2 | 2 | 2 |
| CBS | phr | 2 | 2 | 2 | 2 |
| Schwefel | phr | 2 | 2 | 2 | 2 |

| **Physikalische Messwerte** | **Einheit** | | | | |
|---|---|---|---|---|---|
| Shore A- Härte RT | ShA | 65.2 | 69.1 | 70.5 | 71.4 |
| Shore A- Härte 70 °C | ShA | 58.7 | 64.3 | 69 | 69.8 |
| Rückprallelastizität RT | % | 29.8 | 27.8 | 28.3 | 27 |
| Rückprallelastizität 70 °C | % | 52.7 | 51.5 | 50.6 | 49.6 |
| Diff (Rb 70°C - Rb RT) | % | 22.8 | 23.6 | 22.3 | 22.5 |
| Verlustfaktor 55°C | - | 0.141 | 0.134 | 0.131 | 0.137 |
| Spannungswert 100% | N/mm² | 2.5 | 3.0 | 3.5 | 3.7 |
| Spannungswert 300% | N/mm² | 7.5 | 7.6 | 9.0 | 9.0 |
| Reißdehnung RT (S3) | % | 568 | 515 | 499 | 501 |
| DIN Abrieb | mm3 | 144 | 125 | 120 | - |

## Patentansprüche

1. Silan gemäß Formel I):
I) (R¹)ₒSi-R²-X-A-[Y-A]ₘ-X-R²-Si(R¹)ₒ,
wobei o = 3 ist und die Reste R¹ unabhängig voneinander gleich oder verschieden voneinander sein können und ausgewählt sind aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen, Arylgruppen mit 6 bis 20 Kohlenstoffatomen, Alkylgruppen mit 1 bis 10 Kohlenstoffatomen, Alkenylgruppen mit 2 bis 20 Kohlenstoffatomen, Alkinylgruppen mit 2 bis 20 Kohlenstoffatomen, Aralkylgruppen mit 7 bis 20 Kohlenstoffatomen, Halogeniden oder
Alkylpolyethergruppen -O-(R⁶-O)ᵣ-R⁵ wobei R⁶ gleich oder verschieden sind und verzweigte oder unverzweigte, gesättigte oder ungesättigte, aliphatische, aromatische oder gemischt aliphatisch/aromatische verbrückende C₁-C₃₀-Kohlenwasserstoffgruppen sind, r eine ganze Zahl von 1 bis 30 und R⁵ unsubstituierte oder substituierte, verzweigte oder unverzweigte, terminale Alkyl-, Alkenyl-, Aryl- oder Aralkylgruppen sind
oder
zwei R¹ bilden eine cyclische Dialkoxygruppe mit 2 bis 10 Kohlenstoffatomen, oder es können zwei oder mehr Silane gemäß Formel I) über Reste R¹ verbrückt sein; und
wobei die Reste R² unabhängig voneinander gleich oder verschieden voneinander sein können und ausgewählt sind aus der Gruppe bestehend aus linearen und verzweigten Alkylengruppen mit 1 bis 20 Kohlenstoffatomen, Cycloalkylengruppen mit 4 bis 12 Kohlenstoffatomen, Arylengruppen mit 6 bis 20 Kohlenstoffatomen, Alkenylengruppen mit 2 bis 20 Kohlenstoffatomen, Alkinylengruppen mit 2 bis 20 Kohlenstoffatomen und Aralkylengruppen mit 7 bis 20 Kohlenstoffatomen; und
wobei die Gruppen X unabhängig voneinander gleich oder verschieden voneinander sein können und ausgewählt sind aus den Gruppen -HNC(=O)-, -C(=O)NH-, -C(=O)O-, -OC(=O)-, -OC(=O)NH-, -HNC(=O)O-, -HNC(=O)NH-, -R³NC(=O)NR³-, -R³NC(=NR³)NR³-, - R³NC(=S)NR³-, wobei die Reste R³ innerhalb der Gruppe X gleich oder verschieden sein können und ausgewählt sind aus einem Wasserstoffatom oder ausgewählt sind aus der Gruppe bestehend aus linearen und verzweigten Alkylgruppen mit 1 bis 20 Kohlenstoffatomen, Cycloalkylgruppen mit 4 bis 12 Kohlenstoffatomen, Arylgruppen mit 6 bis 20 Kohlenstoffatomen, Alkenylgruppen mit 2 bis 20 Kohlenstoffatomen, Alkinylgruppen mit 2 bis 20 Kohlenstoffatomen und Aralkylgruppen mit 7 bis 20 Kohlenstoffatomen, unter der Bedingung, dass wenigstens ein R³ innerhalb jeder Gruppe X ein Wasserstoffatom ist; und wobei die Gruppen A innerhalb eines Moleküls unabhängig voneinander gleich oder verschieden voneinander sein können und aromatische Gruppen sind; und wobei die Gruppen Y unabhängig voneinander innerhalb eines Moleküls gleich oder verschieden voneinander sein können und ausgewählt sind aus den Gruppen -HNC(=O)- und -C(=O)NH-;
und wobei m gleich 1 oder 2 ist; und wobei das Silan auch in Form von Oligomeren vorliegen kann, die durch Hydrolyse und Kondensation von Silanen der Formel I) entstehen.

2. Silan nach Anspruch 1, **dadurch gekennzeichnet, dass** die Reste R² innerhalb eines Moleküls gleich sind und lineare oder verzweigte Alkylengruppe mit 2 bis 8 Kohlenstoffatomen sind.

3. Silan nach einem der vorherigen Ansprüche, **dadurch gekennzeichnet, dass** die Reste R¹ unabhängig voneinander gleich oder verschieden sind und Alkoxygruppen mit 1 bis 6 Kohlenstoffatomen oder Halogenide sind.

4. Silan nach einem der vorherigen Ansprüche, **dadurch gekennzeichnet, dass** die Reste R¹ innerhalb einer Silylgruppe (R¹)ₒSi- gleich und Alkoxygruppen mit 1 oder 2 Kohlenstoffatomen, also Methoxygruppen oder Ethoxygruppen, ganz besonders bevorzugt Ethoxygruppen, sind.

5. Silan nach einem der vorherigen Ansprüche, **dadurch gekennzeichnet, dass** die Gruppen X innerhalb eines Moleküls gleich sind und -HNC(=O)NH- sind.

6. Silan nach einem der vorherigen Ansprüche, **dadurch gekennzeichnet, dass** die aromatischen Gruppen A unabhängig voneinander gleich oder verschieden sind und ausgewählt sind aus der Gruppe bestehend aus
Phenylen-, Naphthylen-, Pyridylen-, Pyridazylen-, Pyrimidylen-, Pyrazylen-, Triazylen-, Chinolylen-, Pyrrolylen-, Furanylen-, Thiophenylen-, Pyrazolylen-, Imidazolylen-, Thiazolylen-, Oxazolylen-, Anthracenylen-, Phenanthrenylen- und Acridinylen-Resten.

7. Silan nach einem der vorherigen Ansprüche, **dadurch gekennzeichnet, dass** die aromatischen Gruppen A innerhalb eines Moleküls gleich sind und Phenylen-Gruppen sind.

8. Silan nach Anspruch 1, **dadurch gekennzeichnet, dass** es die folgende Formel III) aufweist:

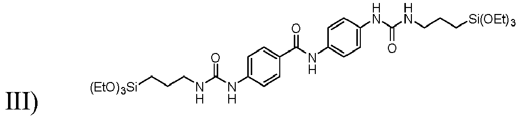

9. Silan nach Anspruch 1, **dadurch gekennzeichnet, dass** es die folgende Formel IV) aufweist:

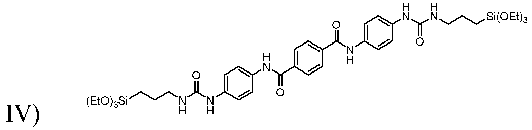

10. Kieselsäure, die mit wenigstens einem Silan nach einem der Ansprüche 1 bis 9 zumindest an deren Oberfläche modifiziert ist.

11. Kautschukmischung enthaltend wenigstens ein Silan nach einem der Ansprüche 1 bis 9 und/oder wenigstens eine Kieselsäure nach Anspruch 10.

12. Fahrzeugreifen, der die Kautschukmischung nach Anspruch 11 in wenigstens einem Bauteil aufweist.

13. Verfahren zur Herstellung des Silanes nach Anspruch 1, wobei es für den Fall, dass m gleich 1 ist, wenigstens die folgenden Verfahrensschritte umfasst:
a) Bereitstellung einer Substanz (R¹)ₒSi-R²-N=C=O ;
b) Bereitstellung einer Substanz H₂N-A-[Y-A]ₘ-NH₂ mit m gleich 1 ;
c) Umsetzung der Substanz aus Schritt a) mit der Substanz aus Schritt b) zu (R¹)ₒSi-R²-X-A-[Y-A]ₘ-X-R²-Si(R¹)ₒ mit m gleich 1.
d) Optional Aufreinigung des in Schritt c) erhaltenen Silans;
oder für den Fall, dass m gleich 2 ist, wenigstens die folgenden Verfahrensschritte umfasst:
aa) Bereitstellung einer Substanz (R¹)ₒSi-R²-X-A-NH₂;
bb) Bereitstellung einer Substanz ClC(=O)-A-C(=O)Cl;
cc) Umsetzung der Substanz aus Schritt aa) mit der Substanz aus Schritt bb) zu (R¹)ₒSi-R²-X-A-[Y-A]ₘ-X-R²-Si(R¹)ₒ mit m gleich 2
dd) Optional Aufreinigung des in Schritt cc) erhaltenen Silans.

## Claims

1. Silane according to formula I):
I) (R¹)ₒSi-R²-X-A-[Y-A]ₘ-X-R²-Si(R¹)ₒ,
wherein o = 3 and the radicals R¹ may independently of one another be identical or different and are selected from alkoxy groups having 1 to 10 carbon atoms, cycloalkoxy groups having 4 to 10 carbon atoms, phenoxy groups having 6 to 20 carbon atoms, aryl groups having 6 to 20 carbon atoms, alkyl groups having 1 to 10 carbon atoms, alkenyl groups having 2 to 20 carbon atoms, alkynyl groups having 2 to 20 carbon atoms, aralkyl groups having 7 to 20 carbon atoms, halides or
alkyl polyether groups -O-(R⁶-O)ᵣ-R⁵, wherein R⁶ are identical or different and are branched or unbranched, saturated or unsaturated, aliphatic, aromatic or mixed aliphatic/aromatic bridging C₁-C₃₀ hydrocarbon groups, r are an integer from 1 to 30 and R⁵ are unsubstituted or substituted, branched or unbranched, terminal alkyl, alkenyl, aryl or aralkyl groups
or
two R¹ form a cyclic dialkoxy group having 2 to 10 carbon atoms or two or more silanes according to formula I) may be bridged via radicals R¹; and
wherein the radicals R² may independently of one another be identical or different and are selected from the group consisting of linear and branched alkylene groups having 1 to 20 carbon atoms,
cycloalkylene groups having 4 to 12 carbon atoms, arylene groups having 6 to 20 carbon atoms, alkenylene groups having 2 to 20 carbon atoms, alkynylene groups having 2 to 20 carbon atoms and aralkylene groups having 7 to 20 carbon atoms; and
wherein the groups X may independently of one another be identical or different and are selected from the groups -HNC(=O)-, -C(=O)NH-, -C(=O)O-, -OC(=O)-, - OC(=O)NH-, -HNC(=O)O-, -HNC(=O)NH-, -R³NC(=O)NR³-, -R³NC(=NR³)NR³-, - R³NC(=S)NR³-, wherein the radicals R³ within the group X may be identical or different and are selected from a hydrogen atom or are selected from the group consisting of linear and branched alkyl groups having 1 to 20 carbon atoms, cycloalkyl groups having 4 to 12 carbon atoms, aryl groups having 6 to 20 carbon atoms, alkenyl groups having 2 to 20 carbon atoms, alkynyl groups having 2 to 20 carbon atoms and aralkyl groups having 7 to 20 carbon atoms, with the proviso that at least one R³ within each group X is a hydrogen atom; and wherein the groups A within a molecule may independently of one another be identical or different and are aromatic groups; and wherein the groups Y independently of one another within a molecule may be identical or different and are selected from the groups -HNC(=O)- and -C(=O)NH-;
and wherein m is equal to 1 or 2; and wherein the silane may also be in the form of oligomers formed by hydrolysis and condensation of silanes of formula I).

2. Silane according to Claim 1, **characterized in that** the radicals R² within a molecule are identical and are linear or branched alkylene group having 2 to 8 carbon atoms.

3. Silane according to either of the preceding claims, **characterized in that** the radicals R¹ are independently of one another identical or different and are alkoxy groups having 1 to 6 carbon atoms or halides.

4. Silane according to any of the preceding claims, **characterized in that** the radicals R¹ within a silyl group (R¹)ₒSi- are identical and are alkoxy groups having 1 or 2 carbon atoms, i.e. methoxy groups or ethoxy groups, very particularly preferably ethoxy groups.

5. Silane according to any of the preceding claims, **characterized in that** the groups X within a molecule are identical and are -HNC(=O)NH-.

6. Silane according to any of the preceding claims, **characterized in that** the aromatic groups A are independently of one another identical or different and are selected from the group consisting of
phenylene, naphthylene, pyridylene, pyridazylene, pyrimidylene, pyrazylene, triazylene, quinolylene, pyrrolylene, furanylene, thiophenylene, pyrazolylene, imidazolylene, thiazolylene, oxazolylene, anthracenylene, phenanthrenylene and acridinylene radicals.

7. Silane according to any of the preceding claims, **characterized in that** the aromatic groups A within a molecule are identical and are phenylene groups.

8. Silane according to Claim 1, **characterized in that** it has the following formula III):

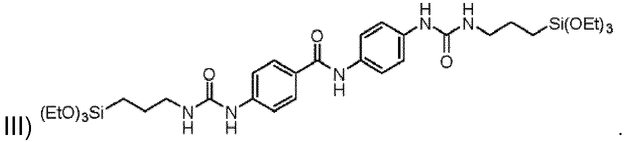

9. Silane according to Claim 1, **characterized in that** it has the following formula IV):

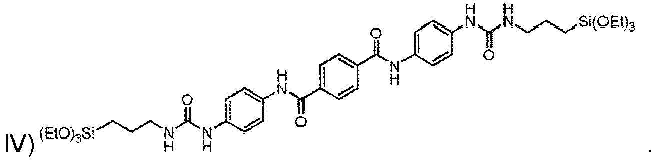

10. Silica modified with at least one silane according to any of Claims 1 to 9 at least at its surface.

11. Rubber mixture containing at least one silane according to any of Claims 1 to 9 and/or at least one silica according to Claim 10.

12. Vehicle tyre comprising the rubber mixture according to Claim 11 in at least one component.

13. Process for producing the silane according to Claim 1, wherein in the case where m is equal to 1 said silane comprises at least the following process steps:
a) providing a substance (R¹)ₒSi-R²-N=C=O;
b) providing a substance H₂N-A-[Y-A]ₘ-NH₂ where m equals 1;
c) reacting the substance from step a) with the substance from step b) to afford (R¹)ₒSi-R²-X-A-[Y-A]ₘ-X-R²-Si(R¹)ₒ where m equals 1;
d) optionally purifying the silane obtained in step c);
or in the case where m is equal to 2 comprises at least the following process steps:
aa) providing a substance (R¹)ₒSi-R²-X-A-NH₂;
bb) providing a substance ClC(=O)-A-C(=O)Cl;
cc) reacting the substance from step aa) with the substance from step bb) to afford (R¹)ₒSi-R²-X-A-[Y-A]ₘ-X-R²-Si(R¹)ₒ where m equals 2;
dd) optionally purifying the silane obtained in step cc).

## Revendications

1. Silane de Formule I) :
l) (R¹)ₒSi-R²-X-A-[Y-A]ₘ-X-R²-Si(R¹)ₒ|
dans laquelle o = 3 et les radicaux R¹ peuvent indépendamment les uns des autres être identiques ou différents et sont choisis parmi les groupes alcoxy ayant 1 à 10 atomes de carbone, les groupes cycloalcoxy ayant 4 à 10 atomes de carbone, les groupes phénoxy ayant 6 à 20 atomes de carbone, les groupes aryle ayant 6 à 20 atomes de carbone, les groupes alkyle ayant 1 à 10 atomes de carbone, les groupes alcényle ayant 2 à 20 atomes de carbone, les groupes alcynyle ayant 2 à 20 atomes de carbone, les groupes aralkyle ayant 7 à 20 atomes de carbone, les halogénures ou
sont des groupes alkylpolyéther -O-(R⁶-O)ᵣ-R⁵, dans lesquels R⁶ sont identiques ou différents et représentent des groupes hydrocarbonés en C₁-C₃₀ pontants, ramifiés ou non ramifiés, saturés ou insaturés, aliphatiques, aromatiques ou mixtes aliphatiques/aromatiques, r représente un nombre entier de 1 à 30 et R⁵ représente des groupes alkyle, alcényle, aryle ou aralkyle terminaux, non substitués ou substitués, ramifiés ou non ramifiés,
ou
deux R¹ forment un groupe dialcoxy cyclique ayant 2 à 10 atomes de carbone, ou deux silanes ou plus de Formule I) peuvent être pontés par des radicaux R¹ ; et dans laquelle les radicaux R² peuvent indépendamment les uns des autres être identiques ou différents et sont choisis dans le groupe consistant en les groupes alkylène linéaires et ramifiés ayant 1 à 20 atomes de carbone, les groupes cycloalkylène ayant 4 à 12 atomes de carbone, les groupes arylène ayant 6 à 20 atomes de carbone, les groupes alcénylène ayant 2 à 20 atomes de carbone, les groupes alcynylène ayant 2 à 20 atomes de carbone et les groupes aralkylène ayant 7 à 20 atomes de carbone ; et
dans laquelle les groupes X peuvent indépendamment les uns des autres être identiques ou différents et sont choisis parmi les groupes -HNC(=O)-, -C(=O)NH-, -C(=O)O-, -OC(=O)-, -OC(=O)NH-, -HNC(=O)O-, -HNC(=O)NH-, -R³NC(=O)NR³-, -R³NC(=NR³)NR³-, - R³NC(=S)NR³-, les radicaux R³ pouvant à l'intérieur du groupe X être identiques ou différents et étant choisis parmi un atome d'hydrogène ou étant choisis dans le groupe consistant en les groupes alkyle linéaires et ramifiés ayant 1 à 20 atomes de carbone, les groupes cycloalkyle ayant 4 à 12 atomes de carbone, les groupes aryle ayant 6 à 20 atomes de carbone, les groupes alcényle ayant 2 à 20 atomes de carbone, les groupes alcynyle ayant 2 à 20 atomes de carbone et les groupes aralkyle ayant 7 à 20 atomes de carbone, sous la condition dans laquelle au moins un R³ à l'intérieur de chaque groupe X est un atome d'hydrogène ; et
dans laquelle les groupes A peuvent à l'intérieur d'une molécule être indépendamment les uns des autres identiques ou différents et représentent des groupes aromatiques ; et
dans laquelle les groupes Y peuvent indépendamment les uns des autres à l'intérieur d'une molécule être identiques ou différents et sont choisis parmi les groupes -HNC(=O)- et -C(=O)NH- ;
et dans laquelle m est égal à 1 ou 2 ; et le silane pouvant aussi se présenter sous la forme d'oligomères, qui sont obtenus par hydrolyse et condensation de silanes de Formule I).

2. Silane selon la revendication 1, **caractérisé en ce que** les radicaux R² à l'intérieur d'une molécule sont identiques et représentent un groupe alkylène linéaire ou ramifié ayant 2 à 8 atomes de carbone.

3. Silane selon l'une des revendications précédentes, **caractérisé en ce que** les radicaux R¹ sont indépendamment les uns des autres identiques ou différents et représentent des groupes alcoxy ayant 1 à 6 atomes de carbone ou des halogénures.

4. Silane selon l'une des revendications précédentes, **caractérisé en ce que** les radicaux R¹ à l'intérieur d'un groupe silyle (R¹)ₒSi- sont identiques et représentent des groupes alcoxy ayant 1 à 2 atomes de carbone, c'est-à-dire des groupes méthoxy ou des groupes éthoxy, d'une manière tout particulièrement préférée des groupes éthoxy.

5. Silane selon l'une des revendications précédentes, **caractérisé en ce que** les groupes X à l'intérieur d'une molécule sont identiques et représentent - HNC(=O)NH-.

6. Silane selon l'une des revendications précédentes, **caractérisé en ce que** les groupes aromatiques A sont indépendamment les uns des autres identiques ou différents et sont choisis dans le groupe consistant en les radicaux phénylène, naphtylène, pyridylène, pyridazylène, pyrimidylène, pyrazylène, triazylène, quinoléylène, pyrrolylène, furanylène, thiophénylène, pyrazolylène, imidazolylène, thiazolylène, oxazolylène, anthracénylène, phénanthrénylène et acridinylène.

7. Silane selon l'une des revendications précédentes, **caractérisé en ce que** les groupes aromatiques A à l'intérieur d'une molécule sont identiques et représentent des groupes phénylène.

8. Silane selon la revendication 1, **caractérisé en ce qu'**il a la formule III) ci-après :

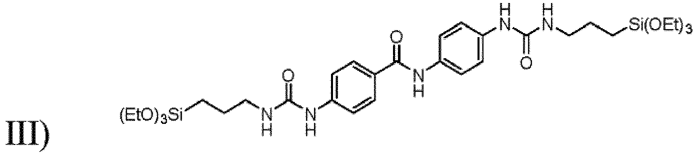

9. Silane selon la revendication 1, **caractérisé en ce qu'**il a la formule IV) ci-après :

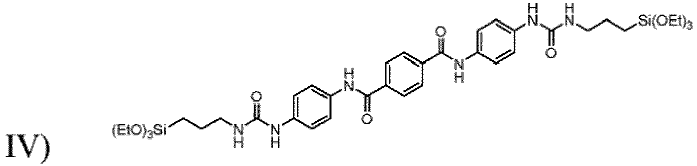

10. Acide silicique, qui est modifié par au moins un silane selon l'une des revendications 1 à 9, au moins sur sa surface.

11. Mélange de caoutchouc contenant au moins un silane selon l'une des revendications 1 à 9 et/ou au moins un acide silicique selon la revendication 10.

12. Pneu de véhicule, qui comprend le mélange de caoutchouc selon la revendication 11 dans au moins un composant.

13. Procédé de fabrication du silane selon la revendication 1, qui, dans le cas dans lequel m égal 1, comprend au moins les étapes suivantes :
a) fourniture d'une substance (R¹)ₒSi-R²-N=C=O ;
b) fourniture d'une substance H₂N-A-[Y-A]ₘ-NH₂, avec m égal à 1 ;
c) réaction de la substance de l'étape a) avec la substance de l'étape b) pour donner (R¹)ₒSi-R²-X-A-[Y-A]ₘ-X-R²-Si(R¹)ₒ, avec m égal à 1 ;
d) éventuellement, purification du silane obtenu dans l'étape c) ;
ou dans le cas dans lequel m est égal à 2, comprend au moins les étapes suivantes :
aa) fourniture d'une substance (R¹)ₒSi-R²-X-A-NH₂ ;
bb) fourniture d'une substance CIC(=O)-A-C(=O)CI ;
cc) réaction de la substance de l'étape aa) avec la substance de l'étape bb) pour donner (R¹)ₒSi-R²-X-A-[Y-A]ₘ-X-R²-Si(R¹)ₒ, avec m égal à 2 ;
dd) éventuellement purification du silane obtenu dans l'étape cc).
